Europäisches Patentamt

European Patent Office

Office européen des brevets

(19)

(11) Numéro de publication: **0 188 972**
**B1**

(12) **FASCICULE DE BREVET EUROPEEN**

(45) Date de publication du fascicule du brevet:
08.02.89

(51) Int. Cl.⁴: **F 24 H 9/20,** G 05 D 23/24

(21) Numéro de dépôt: 85402635.8

(22) Date de dépôt: 26.12.85

(54) Radiateur à ventilateur.

(30) Priorité: 03.01.85 FR 8500039

(43) Date de publication de la demande:
30.07.86 Bulletin 86/31

(45) Mention de la délivrance du brevet:
08.02.89 Bulletin 89/6

(84) Etats contractants désignés:
BE DE FR GB IT NL

(56) Documents cités:
DE-A- 3 221 771
DE-B- 1 241 964
FR-A- 2 418 421
FR-A- 2 515 913
GB-A- 483 039

PATENTS ABSTRACTS OF JAPAN, vol. 7, no. 261, 19
novembre 1983, page 87 M 257; & JP - A - 58 142 149
(TOKYO SHIBAURA DENKI K.K.) 23-08-1983
BUILDING SYSTEMS DESIGN, vol. 67, septembre 1970,
pages 40-47, Caldwell; F. EPSTEIN: "Applying electric
heaters to ducts and HVAC units"
PRODUCT ENGINEERING, vol. 45, no. 2, février 1974,
page 15, New York, US; "Solid state controller heads for
small ac motors"

(73) Titulaire: SEB S.A., F-21260 Selongey (FR)

(72) Inventeur: Hennuy, Jean, en Manchon, Chervinges,
F-69400 Villefrache (FR)
Inventeur: Mieg, Christian, 19 rue Sainte Beuve,
F-69330 Meyzieu (FR)
Inventeur: Debourg, Jean-Pierre, 324 Avenue Berthelot,
F-69008 Lyon (FR)

(74) Mandataire: Bouju, André, Cabinet Bouju 38 avenue de
la Grande Armée, F-75017 Paris (FR)

ACTORUM AG

**Description**

La présente invention concerne un radiateur à ventilateur. Plus précisément, l'invention vise un appareil qui peut fonctionner comme radiateur soufflant pourvu d'un dispositif de régulation de la température du local, et comme ventilateur à vitesse réglable par l'usager.

On connaît actuellement des radiateurs soufflants, dans lesquels l'élévation de la température de l'air du local à chauffer est obtenue par convection forcée, c'est-à-dire par la création d'un débit d'air à travers l'élément chauffant au moyen d'un groupe moteur-ventilateur. Certains radiateurs soufflants comportent une régulation de température, la mise en marche et l'arrêt du chauffage et du ventilateur étant commandés à partir des indications d'un thermostat sensible à la température du local dans lequel est placé le radiateur.

Si l'on veut obtenir avec ce type d'appareil une plage de régulation de température relativement étroite, de l'ordre de 1 à 2°C, les cycles de fonctionnement et d'arrêt sont brefs, souvent de durée inférieure à 1 minute. La succession des mises en route du moteur du ventilateur à une cadence aussi élevée est ressentie comme inconfortable par les usagers. De plus, elle n'est pas favorable à la durabilité du groupe moteur-ventilateur.

Pour éviter ces inconvénients, on doit accepter une régulation de température dans une plage plus étendue, mais les variations de la température du local sont alors perçues par les occupants comme excessives, car ils éprouvent dans les moments correspondant aux extrémités du cycle des sensations de froid ou au contraire de trop grande chaleur.

On connaît également des radiateurs soufflants dans lesquels le chauffage peur être arrêté tandis que le ventilateur fonctionne. Ces appareils sont prévus pour jouer le rôle de ventilateur dans les périodes chaudes.

Si la vitesse du groupe moteur-ventilateur est la même dans ce cas que dans le fonctionnement avec chauffage, le débit d'air sera trop lent pour assurer une ventilation efficace. En effet, un débit d'air élevé ne peut convenir en mode chauffage, car l'air qui traverse trop rapidement l'élément chauffant ne s'échauffe pas suffisamment et fait éprouver une sensation de souffle froid à la sortie de l'appareil.

Pour obtenir différentes vitesses de moteur adaptées au fonctionnement avec ou sans chauffage, et éventuellement adaptées à différentes puissances de chauffage, on connaît des procédés consistant à mettre en série des résistances ou des condensateurs convenables avec un moteur asynchrone monophasé à pôles fendus. Ces procédés ont l'inconvénient de faire travailler le moteur pour certaines vitesses, dans des zones instables, avec un réglage difficile à assurer dans une fabrication de grande série.

D'autres types de moteur se prêtent mieux à la régulation de vitesse sur une gamme de vitesses étendue, mais ces moteurs sont plus coûteux et ne peuvent être utilisés dans des appareils de grande diffusion.

Le document n° 261/M257 du volume n° 7 des «PATENTS ABSTRACTS OF JAPAN» (Tokyo Shi-baura Denki K.K.) décrit un ventilateur chauffant dont le moteur tourne à vitesse élevée lors du fonctionnement en ventilateur simple et à vitesse faible lors du fonctionnement en ventilateur chauffant mais cette variation de vitesse obtenue n'est pas électronique et n'est pas associée à un dispositif de régulation de la température ambiante.

Le but de la présente invention est de réaliser un radiateur soufflant qui soit également un ventilateur efficace lorsque le chauffage est coupé, et dans lequel on puisse faire varier à l'aide de moyens simples la vitesse du moteur d'entraînement du ventilateur de façon à doser le débit d'air en fonction de la puissance de chauffage demandée et à éviter de souffler de l'air trop chaud ou trop froid.

Suivant l'invention le radiateur à ventilateur qui comprend dans un boîtier une entrée d'air et une sortie d'air, un groupe moto-ventilateur qui crée un débit d'air à travers des moyens de chauffage qui peuvent être alimentés ou non suivant le régime de fonctionnement du radiateur, des moyens de réglage de la vitesse du moteur et des moyens de réglage de la puissance de chauffage des moyens de chauffage, est caractérisé en ce que les moyens de chauffage comprennent un premier et un second élément chauffant en ce que les moyens de réglage sont adaptés à réaliser une régulation de la puissance de chauffage des éléments chauffants selon un premier régime de régulation à cycles très courts dite «proportionnelle» dans lequel le premier élément chauffant est alimenté en continu tandis que l'alimentation du deuxième élément chauffant est régulée de manière proportionnelle par une régulation à cycles très courts dite «proportionnelle», et selon un second régime de régulation à cycles plus longs dite «tout ou rien» dans lequel le deuxième élément chauffant n'est plus alimenté, le premier élément chauffant étant régulé par une régulation à cycles plus longs dite «tout ou rien», le premier régime intervenant en complément du second pour obtenir un réglage fin de la température du local chauffé par ledit radiateur.

Ainsi une partie de la puissance de chauffage est utilisée en permanence, tandis que l'appoint de chauffage nécessaire est fourni par le reste de la puissance de chauffage, selon une régulation du type modulant qui lui est propre et qui est très précise.

De plus, la régulation de puissance intervenant par cycles très courts, de l'ordre de quelques secondes, la température du local à chauffer reste très voisine de la température de consigne, avec des oscillations qui peuvent ne pas dépasser 1°C. Pendant ces cycles courts de régulation, la marche du moteur n'est pas interrompue, ce qui évite l'inconfort dû à des mises en route fréquentes.

Lorsque la puissance demandée devient plus faible, inférieure à la puissance partielle utilisée en permanence dans le régime de marche précédent, cette puissance partielle est régulée à son tour selon un procédé classique «tout ou rien», tandis que la puissance additionnnelle régulée dans le premier régime est coupée. Dans ce second régime, les cycles de régulation sont plus longs mais les oscillations de température restent faibles puisque la température spontanée (c'est-à-dire en l'absence de chauffage) du local à chauffer est voisine de la température de consigne.

Selon une version avantageuse de l'invention, les moyens de réglage de la puissance de chauffage des éléments chauffants sont adaptés pour que le passage du premier régime de régulation au second régime de régulation se fasse à la limite supérieure de la plage de variation de la température ambiante dans laquelle le premier régime de régulation est réalisé.

Ainsi, la régulation «tout ou rien» de la puissance de chauffage fournie à l'un des éléments chauffants est asservie à la régulation proportionnelle de la puissance de chauffage fournie à l'autre élément chauffant.

Selon une version préférée de l'invention, dans le premier régime de régulation de chauffage, les moyens de réglage de la puissance de chauffage sont adaptés pour fournir à un dispositif comparateur une tension de référence fonction de la puissance moyenne de chauffage et telle que la vitesse du moteur varie dans le même sens que la puissance moyenne de chauffage et, dans le second régime de régulation du chauffage, ces moyens de réglage sont adaptés pour agir sur le comparateur afin d'arrêter le moteur lorsque l'élément chauffant dont la puissance de chauffage est régulée selon une régulation «tout ou rien» n'est pas alimenté, et pour laisser le moteur tourner à sa vitesse minimale lorsque cet élément chauffant est sous tension.

Ainsi, quel que soit le régime de régulation de la puissance de chauffage des éléments chauffants, la vitesse de rotation du moteur du ventilateur est asservie à la puissance moyenne de chauffage fournie. La température de l'air soufflé est ainsi maintenue sensiblement constante ce qui permet d'obtenir une sensation de confort optimal pour les utilisateurs.

D'autres particularités et avantages de l'invention apparaîtront encore dans la description ci-après.

Aux dessins annexés donnés à titre d'exemples non limitatifs:

la figure 1 est une vue schématique en élévation d'un radiateur-ventilateur conforme à l'invention, le boîtier extérieur entourant le groupe moteur-ventilateur ainsi que l'élément chauffant étant représentés en coupe;

la figure 2 est le schéma électrique d'un dispositif de contrôle et de régulation conforme à l'invention.

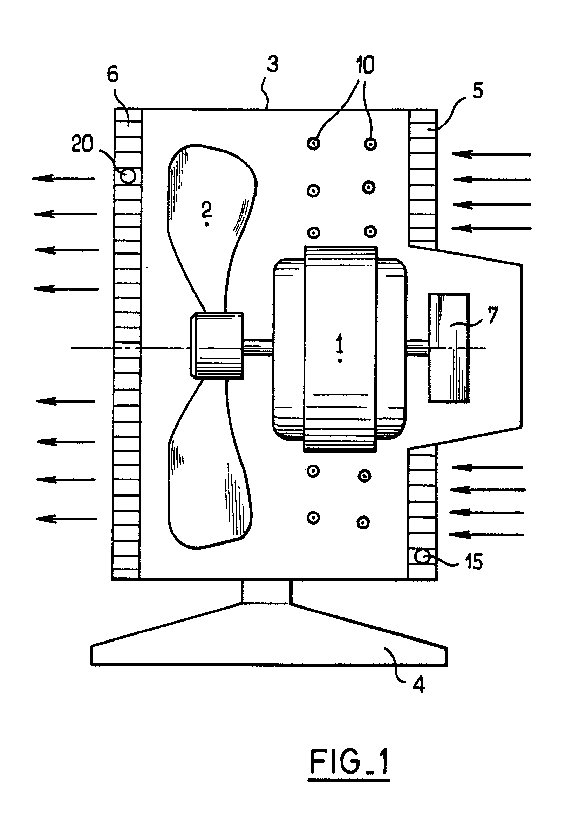

On voit à la figure 1 le moteur 1 et l'hélice 2 entraînée par celui-ci, placés dans un boîtier 3 supporté par un pied-support 4, et comportant latéralement une grille d'entrée d'air 5 placée sur l'un des côtés et une grille de sortie d'air 6, placée de l'autre côté en aval de l'hélice 2.

Les caractéristiques de l'ensemble hélice 2-moteur 1 sont celles d'un groupe moteur-ventilateur efficace pour la saison chaude. Le moteur 1 entraîne également un capteur de vitesse 7 qui peut être un moteur synchrone ou un petit moteur à courant continu. Le capteur 7 délivre une tension proportionnelle à la vitesse du moteur 1.

L'appareil comprend également un élément chauffant 10 entourant le moteur 1 et traversé par les filets d'air qui traversent le boîtier 3 sous l'effet de la rotation de l'hélice 2. L'élément chauffant 10 est constitué d'une résistance électrique convenablement disposée, ou de plusieurs résistances qui peuvent être alimentées séparément de façon à disposer de plusieurs puissances de chauffage, suivant le nombre de résistances mises sous tension. Dans la grille d'entrée d'air 5 ou à proximité de cette grille est disposé un capteur de température 15 qui mesure la température de l'air aspiré.

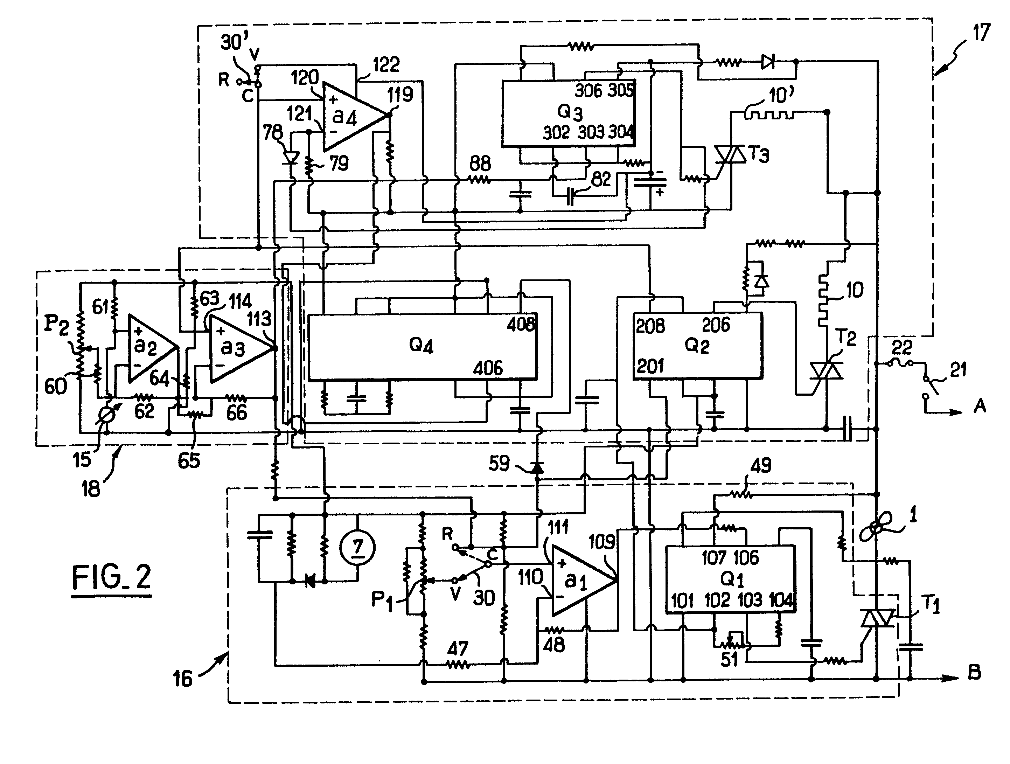

En nous reportant maintenant au schéma électrique de la figure 2, on retrouve représentés schématiquement le moteur 1, le capteur de vitesse 7, deux résistances 10 et 10' constituant les éléments chauffants, et le capteur de température 15. A et B désignent les bornes de raccordement du circuit à la tension du secteur, et l'interrupteur 21, lorsqu'il est fermé, met sous tension le circuit électrique représenté, en passant par un coupe-circuit thermique de sécurité 22. Le moteur 1 et les résistances 10 et 10' sont alimentés en courant par l'intermédiaire de dispositifs interrupteurs électroniques de puissance tels que des triacs, respectivement T1, T2, T3. Un commutateur double 30, 30' à deux positions, peut relier le contact commun 30C aux bornes 30V ou 30R, et en même temps le contact commun 30'C aux bornes 30'V ou 30'R.

La borne 30V est connectée au curseur d'un potentiomètre p1 faisant partie d'un circuit de réglage 16 de la vitesse du moteur 1. Le contact commun 30C est connecté à une entrée 111 d'un amplificateur opérationnel a1, qui intègre une boucle de contre-réaction 109-48-110. L'entrée 110 de l'amplificateur opérationnel a1 reçoit également, via la résistance 47, le signal délivré par le capteur de vitesse 7. Un circuit intégré Q1 règle la variation de courant dans le moteur 1 par déphasage de la tension secteur 101-107-49 en fonction des signaux reçus à l'entrée 106 en provenance de l'amplificateur opérationnel a1, et en fonction de l'ajustement réalisé par un petit potentiomètre ajustable 51 inséré entre les entrées 102 et 104 du circuit intégré Q1. La sortie 103 du circuit Q1 commande par ailleurs la gâchette du triac T1.

La borne 30R du commutateur 30 est connectée à la sortie 113 d'un ensemble de régulation de température 18 qui comprend un potentiomètre p2, un capteur 15 tel qu'une thermistance, deux amplificateurs opérationnels a2 et a3 et un ensemble de résistances appropriées 60, 61, 62, 63, 64, 65 et 66. Ce type de circuit de régulation est connu, et l'homme de l'art sait qu'on peut choisir les valeurs des composants de telle façon qu'après calibrage par l'amplificateur opérationnel a2 du point de mesure déterminé par le potentiomètre p2 et la thermistance 15, puis amplification du signal par le deuxième amplificateur opérationnel a3, on dispose à la sortie 113 d'une tension variable dans une plage dont l'étendue correspond à une variation de 1°C de la température ambiante, captée par la thermistance 15. Il s'agit d'un système de régulation du type modulant dite proportionnelle bien connu de l'homme de l'art.

La résistance chauffante 10 est alimentée via le triac T2, dont la gâchette est connectée à la sortie 206 d'un circuit intégré Q2, faisant partie d'un circuit 17 de réglage de la puissance.

La résistance chauffante 10' est alimentée via le triac T3, dont la gâchette est connectée à la sortie 306 d'un circuit intégré Q3. L'entrée 303 du circuit Q3 est connectée via la résistance 88 à la sortie 113 du circuit de régulation 18. Entre les entrées 302 et 304 du circuit Q3, le condensateur 82 détermine la période t, de contrôle du signal reçu en 303.

La sortie 306 du circuit Q3 est également connectée, via une diode 78, à une entrée 121 d'un amplificateur opérationnel inverseur a4, dont la sortie 119 est reliée à l'entrée 406 d'un circuit intégré Q4. Ce circuit Q4 est une bascule de comptage, qui est remise à zéro tant que l'entrée 406 est alimentée. La sortie 408 du circuit Q4 est reliée à l'entrée 201 du circuit Q2 via une diode 59.

Le contact commun 30'C du commutateur double 30, 30' est relié à la deuxième entrée 120 de l'amplificateur inverseur a4, ainsi qu'à la borne 208 du circuit Q2 et à l'entrée 114 de l'amplificateur opérationnel a3. La borne 30'V est connectée à la borne 122 de l'amplificateur opérationnel a4 et à l'entrée 305 du circuit intégré Q3. La borne 30'R est un contact de repos, non connecté.

Les composants et connexions du schéma électrique de la figure 2 non détaillés ici remplissent des fonctions classiques qui seront claires pour les spécialistes à l'examen du schéma.

Le fonctionnement du dispositif décrit est le suivant.

Lorsque le commutateur double 30, 30' est placé sur la position V, c'est-à-dire que les contacts communs 30C, 30'C sont reliés respectivement aux bornes 30V, 30'V, l'appareil fonctionne en mode ventilation sans chauffage. En effet, la fermeture du contact 30'C-30'V court-circuite la partie du circuit qui comprend la résistance 79, et l'on peut voir que cela amène les circuits intégrés Q2 et Q3, par leurs sorties respectives 206 et 306, à cesser d'alimenter les gâchettes des triacs T2 et T3. Le circuit des résistances 10 et 10' est ainsi interrompu.

Simultanément, la fermeture du contact 30C-30V alimente l'entrée 111 de l'amplificateur opérationnel a1 sous la tension de référence définie par la position du potentiomètre p1. Ce potentiomètre est manoeuvrable par l'usager pour régler la vitesse du moteur 1. L'amplificateur opérationnel a1 reçoit d'autre part à l'entrée 110 la tension provenant du capteur de vitesse 7, et délivre à la sortie 109 une tension continue qui dépend de la différence entre la tension de référence (potentiomètre p1) et la tension provenant du capteur 7. Le signal disponible à la sortie 109 est adressé à l'entrée 106 du circuit intégré Q1, et commande le déphasage de la tension secteur opéré par le circuit Q1 pour l'alimentation du moteur 1. La gâchette du triac T1 est d'autre part alimentée à partir de la sortie 103 du circuit Q1.

Ainsi, tant que la tension provenant du capteur 7 est inférieure à la tension de référence, le moteur est alimenté sous la tension du secteur. Quand la vitesse du moteur atteint la valeur correspondant à la tension de référence, l'alimentation du moteur passe de la tension secteur à zéro avec une progressivité qui correspond à une faible variation de vitesse, de quelques tours/minute.

La plage de variation du potentiomètre p1 permet de faire fonctionner le moteur 1 au gré de l'usager dans une gamme de vitesses continue où les vitesses extrêmes peuvent être dans un rapport de 1 à 5, par exemple de 200 tours/min. à 1000 tours/min. La régulation de vitesse par déphases permet un fonctionnement stable du moteur dans toute la gamme des vitesses même avec un moteur économique du type asynchrone monophasé à pôles fendus. Elle permet également un bon démarrage du moteur à faible vitesse, même si la tension du réseau est à la valeur minimale autorisée, soit 187 volts.

Lorsque le commutateur double 30, 30' est placé sur la position R, c'est-à-dire que les contacts communs 30C, 30'C sont reliés respectivement aux bornes 30R, 30'R, l'appareil fonctionne en mode radiateur. Ce fonctionnement s'opère suivant deux régimes possibles, selon la puissance de chauffage nécessaire.

Un premier régime correspond à l'alimentation continue de la résistance chauffante 10, de puissance par exemple égale à 1000 W, et à une régulation proportionnelle, c'est-à-dire à cycle de contrôle court, de la résistance chauffante 10'. Ce régime correspond au cas où la tension disponible à la sortie 113 du circuit de régulation 18 est située à l'intérieur de la plage de variation qui correspond à une variation de 1°C de la température ambiante mesurée par le capteur 15, c'est-à-dire la zone de régulation proportionnelle. Dans ce cas, le circuit Q3, à chaque fin de cycle dont la période $t_1$ a été définie par le condensateur 82 comme on l'a indiqué précédemment, et en fonction du signal reçu à l'entrée 303 en provenance de la sortie 113 du circuit de régulation 18, maintient ou interrompt l'alimentation de la résistance chauffante 10'. L'entrée 406 de remise à zéro du compteur Q4 reste alimentée dans les mêmes conditions via la chaîne des composants 306, 78, 121, 119, 406, c'est-à-dire à partir de la tension de gâchette du triac T3 par l'intermédiaire de l'amplificateur inverseur a4. Si la durée des coupures d'alimentation ne dépasse par la période $t_1$, la sortie 408 du compteur Q4 rest à l'état zéro volt, et le circuit Q2 maintient l'alimentation de la résistance 10. Simultanément, par l'intermédiaire de la fermeture du contact 30R-30C, le signal provenant de la sortie 113 du circuit de régulation 18 est transmis à l'entrée 111 de !'amplificateur opérationnel a1, et devient donc la tension de référence réglant la vitesse du moteur 1. On fait en sorte, par des valeurs convenables des composants, que la vitesse du moteur reste faible et varie dans une plage relativement restreinte, de 150 tours/min. à 250 tours/min. par exemple pour des variations du signal provenant de 113 qui font varier par ailleurs la puissance moyenne dissipée dans la résistance 10' entre 0% et 100% de la puissance nominale de cette résistance 10'. Ainsi la vitesse du moteur est plus élevée lorsque la puissance moyenne de chauffage est elle-même élevée, et se réduit lorsque la puissance moyenne de chauffage diminue. On peut ainsi obtenir une température à peu près constante de l'air soufflé à travers la grille 6.

Le deuxième régime de fonctionnement de l'appareil en mode radiateur correspond au cas où le signal disponible à la sortie 113 du circuit de régulation 18 quitte la plage qui correspond à la régulation proportionnelle de la résistance chauffante 10' (par exem-

ple de puissance également égale à 1000 W) parce que la température ambiante mesurée par le capteur 15 reste supérieure à la température de consigne fixée par le potentiomètre p2. Dans ce cas, l'alimentation de l'entrée de remise à zéro 406 du compteur Q4 reste coupée pendant une durée supérieure à la période t₁. A partir d'une durée t₂ déterminée par le réglage du compteur Q4, (t2>t1), la sortie 408 du compteur Q4 change d'état et passe à −9 volts, et le circuit intégré Q2 interrompt l'alimentation de la résistance chauffante 10. Comme la sortie 408 est également reliée, via la diode 59 et les contacts 30R-30C, à l'entrée 111 de l'amplificateur opérationnel a1, la sortie 109 de l'amplificateur a1 passe également à une tension voisine de −9 volts et le circuit intégré Q1 coupe la tension gâchette du triac T1 et interrompt ainsi l'alimentation du moteur 1.

En résumé, ce type de régulation à deux régimes permet d'avoir un réglage fin de la température du local du type modulant lorsque la puissance nécessaire est supérieure à la puissance (de 1000 W par exemple) fournie par la résistance 10 seule: on peut alors avoir une régulation proportionnelle à période t1 courte, par exemple de 3 secondes. Le ventilateur 2 tourne dans ce cas à une vitesse régulée pour assurer des variations faibles de la température de l'air soufflé, cette vitesse restant lente par exemple comprise entre 150 et 250 t/mn donc assurant un fonctionnement peu bruyant. Le moteur n'étant jamais coupé dans ce régime, on évite l'inconvénient des démarrages fréquents qui autrement gênent les personnes présentes dans la pièce et réduisant la longévité du moteur.

Lorsque la puissance de chauffage demandée est plus faible (par exemple inférieure à 1000 W), l'appareil fonctionne en régulation classique par tout ou rien sur la seule résistance chauffante 10. Puisque la puissance de chauffage nécessaire est faible, les oscillations de température du local sont elles-mêmes faibles et à période longue, et l'inconvénient des mises en marche et arrêts est fortement réduit, d'autant que le moteur 1 est toujours utilisé dans ce cas à sa vitesse minimale (par exemple 150 tours/min.).

Bien entendu, l'invention n'est pas limitée à l'exemple que l'on vient de décrire et de nombreuses variantes sont possibles sans sortir du cadre de l'invention. Notamment, la valeur relative des résistances 10 et 10' et celles des périodes t₁ et t₂ peuvent être adaptées aux besoins particuliers à satisfaire. Des appareils comportant plus de deux résistances chauffantes à régulation distincte peuvent également être dérivés du dispositif décrit.

## Revendications

1. Radiateur à ventilateur comprenant dans un boîtier (3) une entrée d'air (5) et une sortie d'air (6), un groupe moto-ventilateur (1, 2) qui crée un débit d'air à travers des moyens de chauffage (10, 10') qui peuvent être alimentés ou non suivant le régime de fonctionnement du radiateur, des moyens (16) de réglage de la vitesse du moteur (1) et des moyens (17, 18) de réglage de la puissance de chauffage des moyens de chauffage (10, 10'), caractérisé en ce que les moyens de chauffage comprennent un premier et un second élément chauffant (10, 10'), en ce que les moyens de réglage (17, 18) sont adaptés à réaliser une régulation de la puissance de chauffage des éléments (10, 10') selon un premier régime de régulation dans lequel le premier élément chauffant (10) est alimenté en continu tandis que l'alimentation du deuxième élément chauffant (10') est régulée de manière proportionnelle par une régulation à cycles très courts dite «proportionnelle», et selon un second régime de régulation dans lequel le deuxième élément chauffant (10') n'est plus alimenté, le premier élément chauffant (10) étant régulé par une régulation à cycles plus long dite «tout ou rien» le premier régime intervenant en complément du second pour obtenir un réglage fin de la température du local chauffé par ledit radiateur.

2. Radiateur selon la revendication 1, caractérisé en ce que les moyens (17, 18) de réglage de la puissance de chauffage des éléments (10, 10') sont adaptés pour que le passage du premier régime de régulation au second régime de régulation se fasse à la limite supérieure de la plage de variation de la température ambiante dans laquelle le premier régime de régulation est réalisé.

3. Radiateur selon la revendication 2, caractérisé en ce que, dans le premier régime de régulation de chauffage, les moyens de réglage (17, 18) sont adaptés pour fournir à un dispositif comparateur (a1) une tension de référence fonction de la puissance moyenne de chauffage et telle que la vitesse du moteur (1) varie dans le même sens que la puissance moyenne de chauffage, et en ce que, dans le second régime de régulation du chauffage, les moyens (17, 18) sont adaptés pour agir sur le comparateur (a1) afin d'arrêter le moteur lorsque le premier élément chauffant (10) n'est pas alimenté, et pour laisser le moteur tourner à sa vitesse minimale lorsque le premier chauffant (10) est sous tension.

4. Radiateur selon l'une des revendications 1 à 3, caractérisé en ce que les moyens de réglage (17, 18) de la puissance de chauffage comprennent un capteur de température (15) placé dans le flux d'air traversant l'entrée (5) du boîtier (3).

5. Radiateur selon l'une des revendications 1 à 4, caractérisé en ce que les moyens (16) de réglage de la vitesse du moteur (1) comprennent un capteur de vitesse (7) entraîné par le moteur, un potentiomètre (p1) manoeuvrable par l'usager, et un dispositif comparateur (a1) agissant sur un dispositif d'alimentation (Q1) qui crée un déphasage de la tension d'alimentation du moteur (1) fonction du résultat de la comparaison des signaux fournis par le capteur (7) et le potentiomètre (p1).

6. Radiateur selon la revendication 5, caractérisé en ce que les moyens (16) de réglage de la vitesse du moteur sont adaptés pour agir en fonction d'un signal de référence qui provient du potentiomètre (p1) en mode ventilation et des moyens (17, 18) de réglage de la puissance de chauffage en mode ventilation et chauffage.

## Patentansprüche

1. Heizelement mit einem Lufteinlass (5) und einem Luftauslass (6) in einem Gehäuse (3), einer Motor-Lüfter-Baugruppe (1, 2), die einen Luftstrom durch Heizmittel (10, 10') erzeugt, die je nach der Betriebsart des Heizlüfters gespeist oder nicht gespeist sein können, Mitteln (16) zum Regeln der Geschwindigkeit des Motors (1) und Mitteln (17, 18) zum Regeln der Heizleistung der Heizmittel (10, 10'), dadurch gekennzeichnet, dass die Heizmittel ein erstes und ein zweites Heizelement (10, 10') aufweisen, dass die Regelmittel (17, 18) eine Regelung der Heizleistung der Heizelemente (10, 10') gemäss einem ersten Regelantrieb ausführen, in dem das erste Heizelement (10) kontinuierlich gespeist wird, während die Versorgung des zweiten Heizelements (10') proportional durch eine Regelung mit sehr kurzen Zyklen, also Proportionalregelung genannt, geregelt wird, und gemäss einem zweiten Regelbetrieb ausführen, in dem das zweite Heizelement (10') nicht versorgt ist, wobei das erste Heizelement (10) durch eine Regelung mit längeren Zyklen, also Ein-Haus-Regelung genannt, geregelt wird, wobei der erste Regelbetrieb in Ergänzung zum zweiten Regelbetrieb wirkt, damit eine Feinregelung der Temperatur des von dem Heizlüfter erwärmten Orts erhalten wird.

2. Heizlüfter nach Anspruch 1, dadurch gekennzeichnet, dass die Mittel (17, 18) zum Regeln der Heizleistung der Heizelemente (10, 10') so angepasst sind, dass der Übergang vom ersten Regelbetrieb in den zweiten Regelbetrieb an der Obergrenze des Änderungsbereichs der Umgebungstemperatur stattfindet, bei der der erste Regelbetrieb verwirklicht wird.

3. Heizlüfter nach Anspruch 2, dadurch gekennzeichnet, dass die Regelmittel (17, 18) im ersten Heizregelbetrieb an eine Vergleichsvorrichtung (a1) eine Bezugsspannung liefern können, die von der mittleren Heizleistung abhängt und so ist, dass sich die Drehzahl des Motors (1) im gleichen Sinn wie die mittlere Heizleistung ändert, und dass die Mittel (17, 18) im zweiten Heizregelbetrieb auf die Vergleichsvorrichtung (a1) einwirken können, damit der Motor angehalten wird, wenn das erste Heizelement (10) nicht gespeist wird, und der Motor mit seiner minimalen Drehzahl weiterlaufen kann, wenn das erste Heizelement (10) unter Spannung steht.

4. Heizlüfter nach einem der Ansprüche 1 bis 3, dadurch gekennzeichnet, dass die Mittel (17, 18) zum Regeln der Heizleistung einen Temperaturaufnehmer (15) enthalten, der in dem den Einlass (5) des Gehäuses (3) durchfliessenden Luftstrom angeordnet ist.

5. Heizlüfter nach einem der Ansprüche 1 bis 4, dadurch gekennzeichnet, dass die Mittel (16) zum Regeln der Drehzahl des Motors (1) einen von dem Motor angetriebenen Drehzahlaufnehmer (7), ein vom Benutzer betätigbares Potentiometer (p1) und eine Vergleichsvorrichtung (a1) enthalten, die auf eine Versorgungsvorrichtung (Q1) einwirkt, die eine Phasenverschiebung der Versorgungsspannung des Motors (1) in Abhängigkeit vom Ergebnis des Vergleichs der von dem Aufnehmer (7) und dem Potentiometer (p1) gelieferten Signale erzeugt.

6. Heizlüfter nach Anspruch 5, dadurch gekennzeichnet, dass die Mittel (16) zum Regeln der Drehzahl des Motors in Abhängigkeit von einem Bezugssignal arbeiten können, das im Lüftungsbetrieb von dem Potentiometer (p1) und im Lüftungs- und Heizbetrieb von den Mitteln (17, 18) zum Regeln der Heizleistung kommt.

## Claims

1. A fan-assisted radiator comprising in a casing (3): an air inlet (5) and an air outlet (6); a motor and fan set (1, 2) producing an air flow through heating means (10, 10') which may or may not be energized according to the form of radiator operation; means (16) for controlling the speed of the motor (1); and means (17, 18) for controlling the heating power of the heating means (10, 10'), characterised in that the heating means comprise a first heating element and a second heating element (10, 10'), the control means (17, 18) are adapted to control the heating power of the elements (10, 10') by a first form of control in which the first heating element (10) is energized continuously whereas the second heating element (10') is energized in a controlled proportional way by a control based on very short cycles and called «proportional», and by a second form of control in which the second heating element (10') is not energized, the first heating element (10) being controlled by a control based on longer cycles and called «on/off control», the first form of control being operative as a complement to the second form of control to produce fine control of the temperature of the room heated by the radiator.

2. A radiator according to claim 1, characterised in that the means (17, 18) for controlling the heating power of the elements (10, 10') are so devised that the changeover from the first form of control to the second form of control occurs at the top limit of the ambient temperature variation range in which the first form of control is operative.

3. A radiator according to claim 2, characterised in that in the first form of heating control the control means (17, 18) are adapted to supply a comparator (a1) with a reference voltage which depends upon the average heating power and which is such that the speed of the motor (1) varies in the same sense as the average heating power, and in the second form of heating control the means (17, 18) are adapted to act on the comparator (a1) to stop the motor when the first heating element (10) is not energized and to allow the motor to run at its minimum speed when the first heating element (10) is energized.

4. A radiator according to any of claims 1 to 3, characterised in that the heating power control means (17, 18) comprise a temperature sensor (15) disposed in the air flow through the casing inlet (5).

5. A radiator according to any of claims 1 to 4, characterised in that the motor speed control means (16) comprise a speed sensor (7) driven by the motor, a user-controllable potentiometer (p1), and a comparator (a1) acting on an energization device (Q1) which phase-shifts the motor supply voltage in dependence upon the result of the comparison between the signals from the detector (7) and potentiometer (p1).

6. A radiator according to claim 5, characterised in that the motor speed control means (16) are adapted to act in dependence upon a reference signal from the potentiometer (p1) in the ventilation mode and from the heating power control means (17, 18) in the ventilating and heating mode.

## FIG_1

FIG. 2